(19) Europäisches Patentamt
European Patent Office
Office européen des brevets

(11) **EP 3 002 993 A1**

(12) **EUROPEAN PATENT APPLICATION**

(43) Date of publication:
06.04.2016 Bulletin 2016/14

(51) Int Cl.:
*H05B 33/08* (2006.01)

(21) Application number: 15186406.3

(22) Date of filing: 23.09.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 24.09.2014 US 201462054896 P

(71) Applicant: **Beijing EffiLED Opto-Electronic Technology Co., Ltd.**
**Beijing 100085 (CN)**

(72) Inventors:
• **TSAI, Po-Ming**
  **Taipei (TW)**
• **LANDRY GRAY, Richard**
  **Saratoga, CA 95070 (US)**

(74) Representative: **Nordmeyer, Philipp Werner**
**df-mp Dörries Frank-Molnia & Pohlman**
**Patentanwälte Rechtsanwälte PartG mbB**
**Theatinerstraße 16**
**80333 München (DE)**

(54) **DEVICES FOR LED DIRECT DRIVER**

(57) The device for LED direct driver comprises a major LED string, a minor LED string set, a pre-regulator, and a direct driver. The major LED string has multiple series-connected LED diodes which has a first end and a second end. The minor LED string set has a first end and a second end, and is formed with multiple series-connected minor strings. The first end of the minor LED string set is connected to the second of the major LED string. Each minor LED string has at least one LED diode. The direct driver is connected to the pre-regulator, the major LED string, the minor LED string, which is configured to short out selected minor LED strings for ensuring the most efficient LED driving configuration. The pre-regulator provides an regulated voltage output. The regulated voltage output fed to the LED direct driver that is able to allow the LED direct driver to provide a constant power output with virtually no output power ripple.

Fig. 1

**Description**

FIELD OF THE INVENTION

Embodiments of the present disclosure relate to devices for LED driver, and especially toward devices for LED direct driver.

BACKGROUND

Conventionally, there are two basic types of LED driving circuits: switching drivers and direct drivers. A switching driver uses a magnetic component (e.g., an inductor) to store energy form an input power supply, and direct the stored power to an LED string. The drawback of the switching driver is that it often needs EMI filters, large amount of required components, and significant ripple output current without large capacitors.

The Direct driver can provide up to 99% efficiency, take very few components, and are quite inexpensive. The problem of the direct driver is that the power factor (PF) and the output power ripple are highly related. For instance, The direct driver can be made to have high PF, but the output power ripple is very large. Similarly, the direct driver can also be designed for almost zero output power ripple, at the cost of poor PF.

Therefore, there is a need for an approach to provide a scheme or means to have an LED driver to be able to drive highly efficient lamps in wide input voltage, low harmonic distortion (HD), and high PF with very small amount of output power ripple.

SOME EXEMPLARY EMBODIMENTS

These and other needs are addressed by the present disclosure, wherein an approach is provided for devices for LED direct driver that are able to drive an LED string in wide input voltage with high power efficiency, low HD, and high PF with small amount of output power ripple.

According to one aspect of an embodiment of the present disclosure, the device for LED direct driver comprises a major LED string, a minor LED string set, a pre-regulator, and a direct driver. The major LED string has multiple series-connected LED diodes which has a first end and a second end. The minor LED string set has a first end and a second end, and is formed with multiple series-connected minor strings. The first end of the minor LED string set is connected to the second of the major LED string. Each minor LED string has at least one LED diode. The direct driver is connected to the pre-regulator, the major LED string, the minor LED string, which is configured to short out selected minor LED strings for ensuring the most efficient LED driving configuration. The pre-regulator provides an regulated voltage output as input voltage for the direct driver with the major LED string and the minor LED string...

Accordingly, the present disclosure is able to provide a device with hybrid approach scheme for solving the LED driver problems. The pre-regulator provides wide input voltage range, high PF and low HD. The pre-regulator does not need to provide a controlled current output, instead of providing a regulated voltage, and the regulated power fed to the LED direct driver that is able to allow the LED direct driver to provide a constant power output with virtually no output power ripple.

BRIEF DESCRIPTION OF THE DRAWINGS

The disclosure is illustrated by way of example, and not by way of limitation, in the figures of the accompanying drawings in which like reference numerals refer to similar elements and in which:

Fig. 1 is a diagram of a device for LED direct driver in accordance with an embodiment of the present disclosure;

Fig. 2 is a circuit diagram of the device for LED direct driver in accordance with the embodiment of Fig. 1;

Fig. 3 is a diagram of another embodiment in accordance with the present disclosure;

Fig. 4 is a diagram of another embodiment in accordance with the present disclosure, which the hysteresis control algorithm is not applied in the controller of the pre-regulator as shown in Fig. 3;

Fig. 5 is a diagram of another embodiment of the in accordance with the present disclosure;

Fig. 6 is a diagram of another embodiment of the in accordance with the present disclosure for a device for multiple parallel-connected LED direct drivers being driven from a single pre-regulator; and

Fig. 7 is a diagram of an embodiment of the LED direct driver in accordance with a device of the present disclosure.

DESCRIPTION OF THE PREFERRED EMBODIMENT

Embodiments of the apparatus and/or methods are disclosed. In the following description, for purposes of explanation, numerous specific details are set forth in order to provide a thorough understanding of the embodiments of the disclosure. It is apparent, however, to one skilled in the art that the present disclosure may be practiced without these specific details or with an equivalent arrangement.

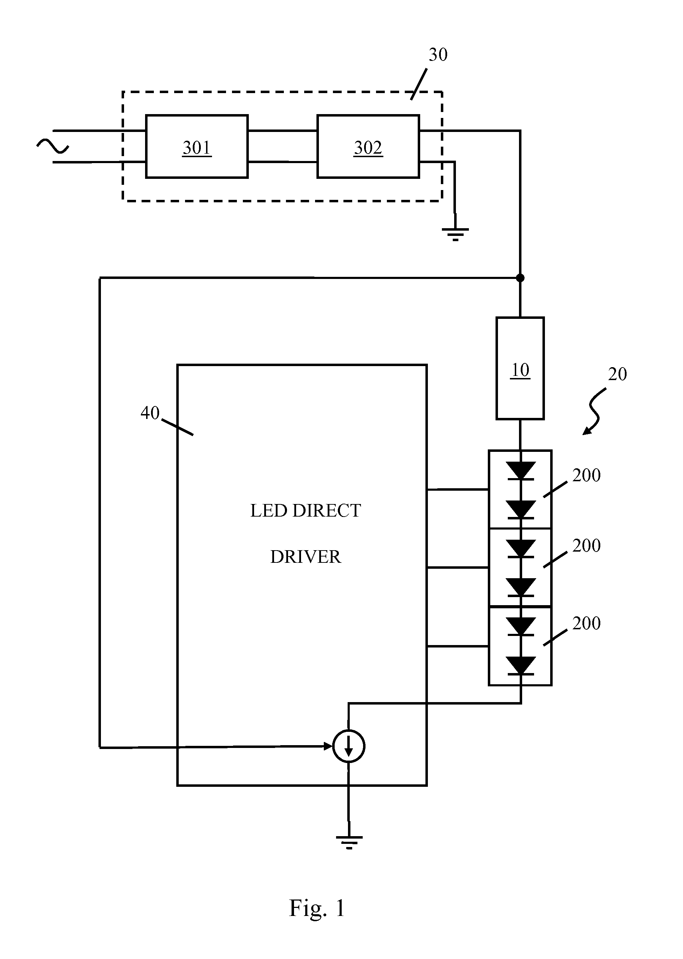

With reference to Fig. 1, Fig. 1 is a diagram of a device for LED direct driver in accordance with an embodiment of the present disclosure. In this embodiment, the device for LED direct driver comprises a major LED string 10, a minor LED string set 20, a pre-regulator 30, and a direct driver 40. The major LED string 10 has multiple series-connected LED diodes which has a first end and a second end. The minor LED string set 20 has a first end and a second end, and is formed with multiple series-connected minor strings 200. The first end of the minor LED string set 20 is connected to the second of the major LED string 10. Each minor LED string 200 has at least one LED diode.

The pre-regulator 30 comprises a diode rectifier 301 and a power factor (PF) correction module 302. The diode rectifier 301 is connected to a power source, and is configured for converting an AC input voltage of the power source to a pulsating DC voltage. The PF correction module 302 is connected between the diode rectifier 301 and the first end of the major LED string 10, which regulates the pulsating DC voltage to a regulated voltage. The pre-regulator 30 provides wide input voltage range, high PF and low HD. It is noted that the pre-regulator 30 does not need to provide a controlled current output, instead it just needs to provide a regulated voltage output with some reasonably small amount of voltage ripple.

In an embodiment of the present disclosure, the pre-regulator 30 may be a boost-mode quasi-resonant scheme. The boost-mode quasi-resonant scheme pre-regulator 30 is used in the boundary mode condition, which is the simplest ways to be implement. The peak output regulated voltage of the pre-regulator 30 would be set to the expected maximum peak voltage of the AC input voltage of the power source. A person skilled in art will realized that the boost-mode configuration can only provide output voltage that are equal or higher than the AC input voltage. The regulated voltage output drives the major LED string, the minor LED string set or both.

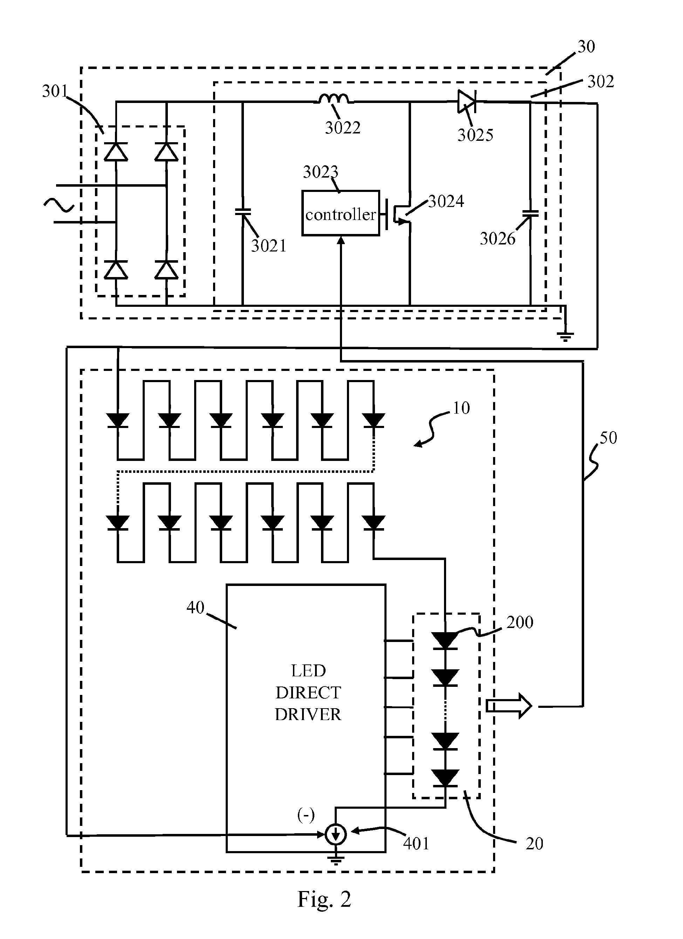

With reference to Fig. 2, Fig. 2 is a circuit diagram of the device for LED direct driver in accordance with the embodiment of Fig. 1. The diode rectifier 301 of the pre-regulator 30 is formed with four diodes. The PF correction module 302 comprises a first capacitor 3021, an inductor 3022, a controller 3023, a switch transistor 3024, a diode 3025 and a second capacitor 3026. The first capacitor 3021 is connected with the diode rectifier 301 in parallel, and has a first end and a second end. The inductor 3022 has a first end and a second end. The first end of the inductor 3022 is connected to the first end of the first capacitor 3021. The switch transistor 3024 has a first end, a second and a third end. The first end of the switch transistor 3024 is connected to the second end of the inductor 3022. The second end of the switch transistor 3024 is connected to the controller 3023. The second capacitor 3026 has a first end and a second end. The diode 3025 is connected between the first end of the switch transistor 3024 and the first end of the second capacitor 3026. The second ends of the first and second capacitor 3021, 3026, and a third end of the switch transistor 3024 are connected to a common ground.

The direct driver 40 comprises a current source 401, and is connected to each one of the minor LED strings 200, which selectively shorts out selected minor LED strings 200 for ensuring the most efficient LED driving configuration. The current source 401 is connected between the second end of the minor LED string set 20 and the PF correction module 302 of the pre-regulator 30. The direct driver 40 (and its accompanying LED strings 10, 20) has its preset operating voltage range including a maximum and a minimum expected voltages from the pre-regulator 30. The operating voltage range should cover the range of the regulated voltage output from the pre-regulator 30, the ripple from the pre-regulator 30, plus some extra range to cover the change in LED voltage with temperature, diode age and processing variation.

The direct driver 40 adjusts the overall output power of the main LED string 10 and the minor LED string set 20 to be constant by monitoring the voltage across the main LED string 10 and the minor LED string set 20 and adjusting current accordingly.

As shown in Fig. 2, the device for LED direct driver may further comprises a communicating path 50 between the pre-regulator 30 and the direct driver 40. The numbers of the minor LED strings 200 can be reduced as the effective dynamic range of the direct driver 40 increased. For example, if the forward voltage of the major LED string 10 became quite small due to high temperatures, then the minor LED string sets 20 would be added in series with the major LED string 10. If there were not enough minor LED string 200 in the minor LED string sets 20 to compensate for the change in LED forward voltage, then the voltage across the current source 401 in the direct driver 40 would start increase that makes overall efficiency to decrease. Accordingly, once the controller 3023 of the pre-regulator 30 is able to sense the forward voltage of the LED string 10, 20 via the communicating path 50, the pre-regulator 30 could decrease its regulated voltage output, which makes the direct driver 40 to work at its most efficient range. Also, in order to make the overall brightness of the LED strings 10, 20, by sensing the forward voltage of the LED string 10, 20 via the communicating path 50, the pre-regulator 30 can instruct the current source 401 of the direct driver 40 to maintain constant light output.

Suppose instead that the temperature of the LED string 10, 20 became quite low, so that the forward voltage become higher than its nominal value. The direct driver 40 could remove the minors LED string 200 from the minor LED string set 20 until there is no more minor LED string 200 can be remove. The direct driver 40 then instruct the pre-regulator 30 to lower its regulated voltage output, which allows the device work at most efficient manner.

The communication between the direct driver 40 and the pre-regulator 30 could be either a digital word, an analog voltage, or current. In order to avoid "chatter" back and forth between tow values if the number of the minor LED strings 200 was near to the threshold (i.e., a maximum and a minimum expected voltage from the pre-regulator), it requires to add hysteresis into a control algorithm to the controller 3023 of the pre-regulator 30.

Since the pre-regulator 30 only requires a single stage, its efficiency can be higher than 97%. If the efficiency of the direct driver 40 that follows the pre-regulator 30 is 98% then the effective electrical efficiency of the combination in accordance with the present disclosure is 95% (i.e., 97% X 98% = 95%). That is still extremely high. and especially important for high power systems where a 10% efficiency loss could result in many watts of wasted power and heat dissipation problems.

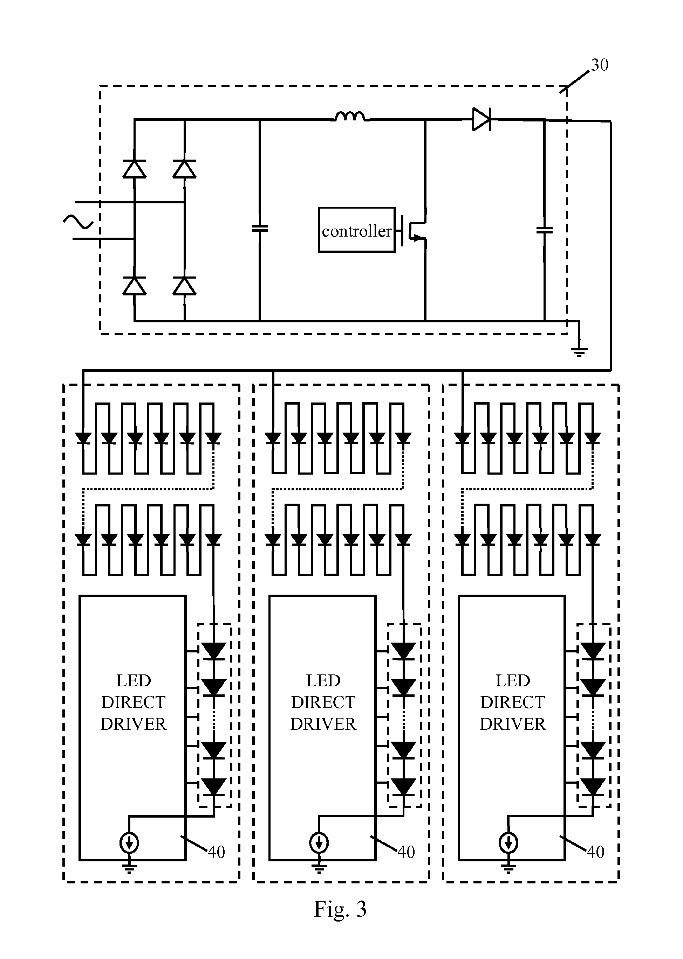

With reference to Fig. 3, Fig. 3 is another embodiment in accordance with the present disclosure. Since efficiency loss in high power systems could result in many watts of wasted power and heat dissipation problems, the structure of the present disclosure becomes more attractive as the power is increased. In this embodiment, as shown in Fig. 3, multiple direct drivers 40 are connected to a single pre-regulator 30. The direct drivers 40 are quite inexpensive so the incremental cost of adding them is quite small. The pre-regulator 30 may need to increase its size as the power increase, however, 2X increase in pre-regulator power results in a less than 2X increase in pre-regulator 30 size and cost. The cost for watt of output power remain low.

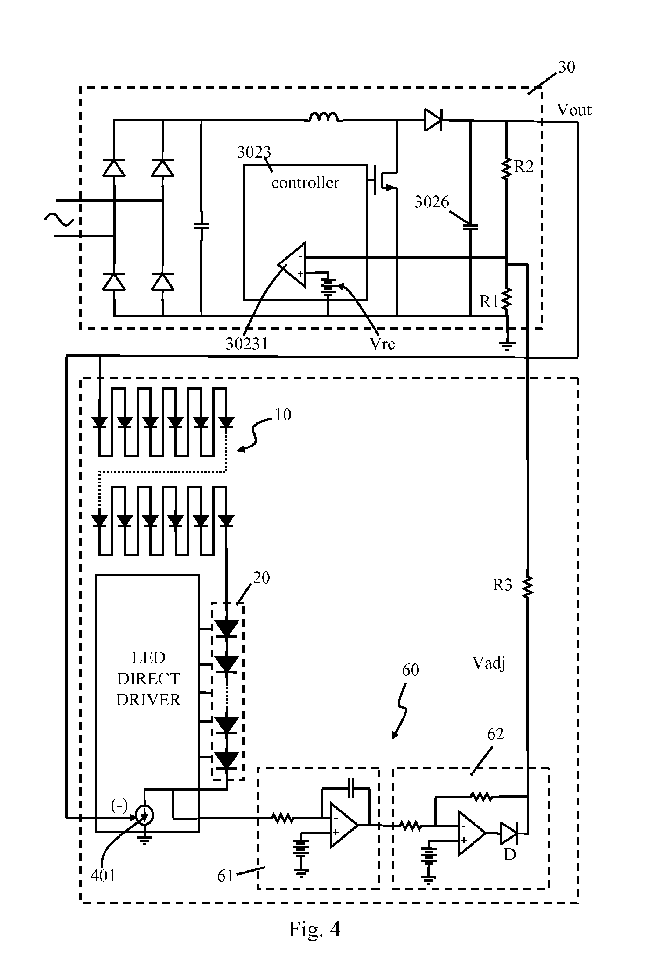

With reference to Fig. 4, Fig. 4 is another embodiment in accordance with the present disclosure, which the hysteresis control algorithm is not applied in the controller of the pre-regulator as shown in Fig. 3. In this embodiment, a device for LED direct driver further comprises a feedback current module 60 and a feedback current path 63 that is connected to an internal comparator 30231 inside the controller 3023 of the pre-regulator 30. The internal comparator 30231 has an internal reference voltage (Vrc). The feedback current module 60 is configured for instructing the controller 3023 to change the regulated voltage output (Vout). The feedback current module 60 comprises an integrator 61 and a current messenger 62. The feedback current path 63 comprises a first resistor R1, a second resistor R2, and third resistor R3. The integrator 61 is connected between the LED minor string set 20 and the current source 401. The current messenger 62 is connected between the integrator 61 and a second end of the third resistor R3, and is configured to selectively source or sink current with a directional diode D that generates an control voltage (Vadj). The first resistor R1 and the second resistor R2 are connected in series, which is paralleled connected to the second capacitor 3026. The first end of the third resistor R3 is connected to a junction of the first resistor R1 and the second resistor R2. In this configuration, an extra current can be injected into the junction of the first resistor R1 and the second resistor R2 through the third resistor R3. The relationship between the regulated voltage output (Vout) and the control voltage (Vadj) can be shown as following:

$$Vout = [(Vrc*R2*R3/R1) + (R3*Vrc) + (R2*Vrc) - (R2*Vadj)] / R3.$$

In the embodiment of the Fig. 4, the integrator 61 is implemented in a structure of the operational amplifier (op-amp) which has a reference voltage (Vr). The current messenger 62 is in form of an "one way inverter". It is called a "one way" inverter since it can only source current into the third resistor R3 that only bring regulated voltage output (Vout) down. It cannot force the regulated voltage output higher than its intrinsic value (set by the ratio of R1/R2).

During operation, if the average value of the voltage across the current source 401 is less than the reference voltage (Vr), the output of the integrator 61 is set to HIGH, and the one way inverter structured current messenger 62 is set to LOW. The current messenger 62 is locked and takes no action. Once the voltage across the current source 401 is higher than the reference voltage (Vr), then the output of the current messenger 62 start to fall. When its voltage is lower than the neutral voltage at an intersection of R1/R2, then the current messenger will start to source the current causing the regulated voltage output (Vout) of the pre-regulator 30 to decrease. The neutral voltage defined in the present disclosure is the voltage at the intersection of R1/R2 which is determined and depends on the reference voltage (Vrc) of the internal comparator 30231 of the controller 3023. In many commercially available controller, the intrinsic parameter of the reference voltage (Vrc) for the internal comparator 30231 of the controller 3023 is around 2.5 volts.

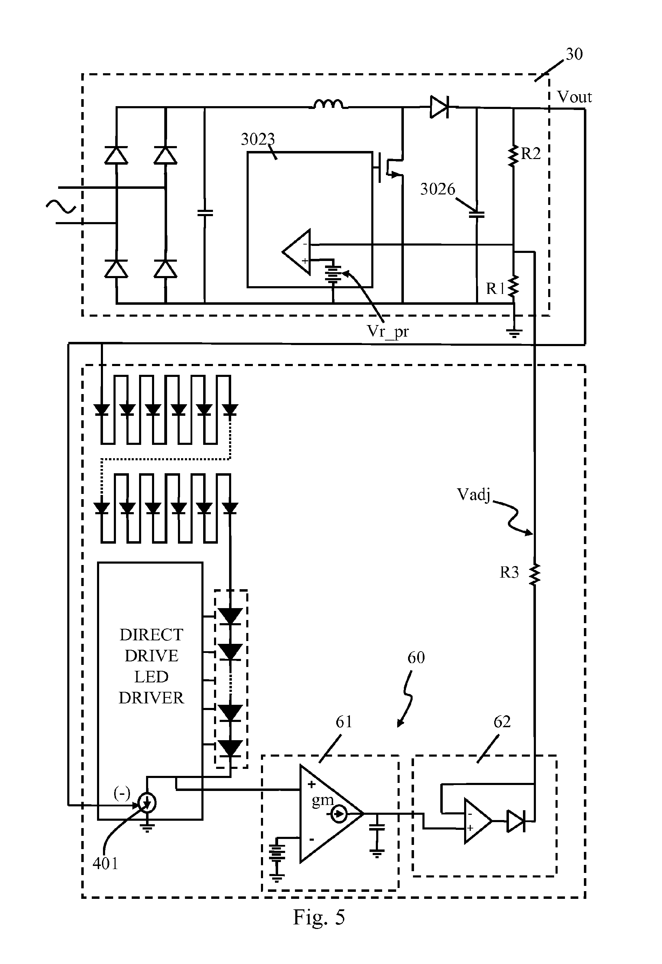

With reference to Fig. 5, Fig. 5 is another embodiment of the in accordance with the present disclosure. The integrator 61 is implemented in a structure of a trans-conductance amplifier driving a capacitor. The current messenger 62 is a form of the buffer. The two embodiments shown in Figs 4 and 5 are similar, which the inverter and the buffer structured current messenger 62 can only source current that makes the regulated voltage output (Vout) can only decrease from its maximum value determined by the ratio of R1/R2.

As is often the case during normal operation the LED diodes will heat up and their forward voltage will decrease, causing the voltage across the current source to increase, which results in decreasing the efficiency and increasing the wasted heat of the lamp. Therefore, by using the feedback current module 60, as shown in embodiments of Figs. 4 and 5, of the present disclosure, which is able to sense the increase of the current source 401 voltage and respond to lower the regulated voltage output (Vout). As the regulated voltage output (Vout), the voltage across the current source decreases too, it causes an increase in efficiency and decreases in wasted heat.

The embodiments of Figs. 4 and 5 shows huge advantages especially to an analog dimming of the LED lamp. During analog dimming, the LED current can decrease to a small fraction of its full scale value, and the forward voltages of every LED diode in string becomes much smaller than a situation where the LED current is at its full value. The pre-regulator 30 of the present disclosure is able to decrease the regulated voltage output during dimming in order to follow the decreased voltage of each LED diode, and thus providing a high efficiency operation during analog dimming.

In a similar manner if over-temperature protection is used on the LED module to decrease the LED current during an over temperature event, then the regulated voltage output of the pre-regulator 30 will decrease along with the LED voltage decrease. This will ensure that the device does not have to withstand any increased operating voltages during over-temperature operation.

Further, the embodiments shown in Figs. 4 and 5 requires some modifications when multiple parallel-connected LED direct drivers being driven from a single pre-regulator. The control voltage (Vadj) requires to be the lowest voltage, not the highest voltage as mentioned in above paragraphs.

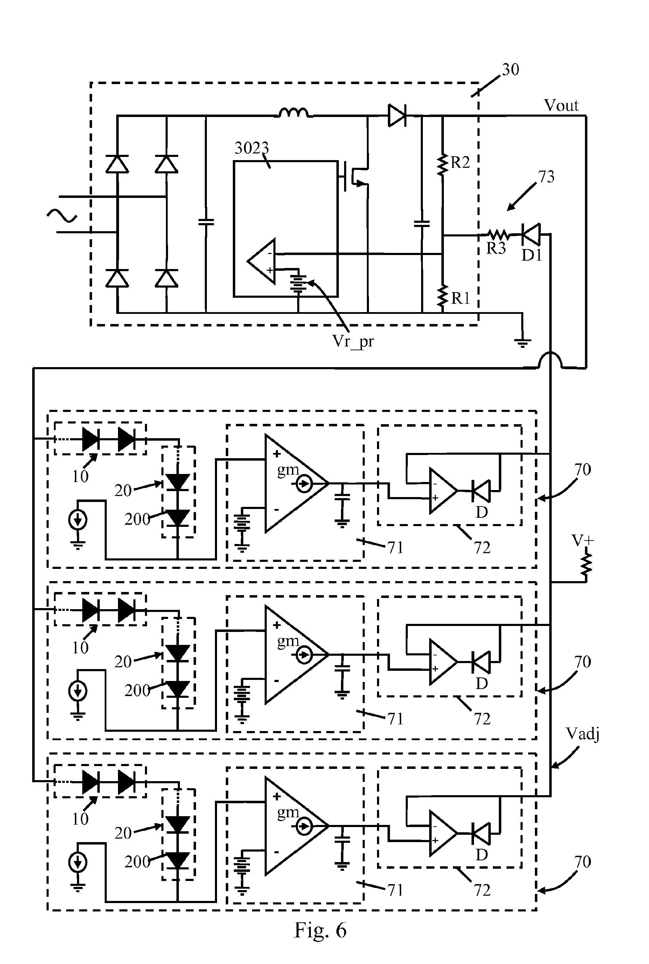

In order to solve this problem and also maintain an absolute maximum regulated voltage output with safety reasons, Fig. 6 is another embodiment of the in accordance with the present disclosure for a device for multiple parallel-connected LED direct drivers being driven from a single pre-regulator. Each LED direct driver (not shown in Fig. 6) is connected a feedback current module 70 that is similar to the embodiments shown in Figs. 4 and 5. Each feedback current module 70 has a integrator 71 and a current messenger 72 connected in series. The difference between Fig. 6 to Figs. 4 and 5 is that the directions of directional diode D of the current messenger 72 is reversed. In this manner, the reversed directional diode D of the current messenger 72 can only sink current. Unlikely the current messenger 62 source current, the current messenger 72 sink the current.

When all the current messengers 72 are connected together, the lowest voltage output of the current messengers 72 are determined as a control voltage (Vadj). Because of the lowest voltage output of the current messengers 72, when fed back into the pre-regulator 30, will set the regulated voltage output (Vout) high enough so that all the LED strings 10, 20 have sufficient voltage to maintain the desired current.

In this embodiment, the feedback current path 73 further comprises an optional securing diode D1. The securing diode D1 is connected between the third resistor R3 and the current messengers 72, and has a anode end and a cathode end. The anode end of the securing diode D1 connects the third resistor R3, and the cathode end of the securing diode D1 connects the current messengers 72. The securing diode D1 only allows current to flow toward the pre-regulator 30 at the junction of the first resistor R1 and the second resistor R2, which ensures that the regulated voltage output will never increase above the set of R1/R2 resistor ratio.

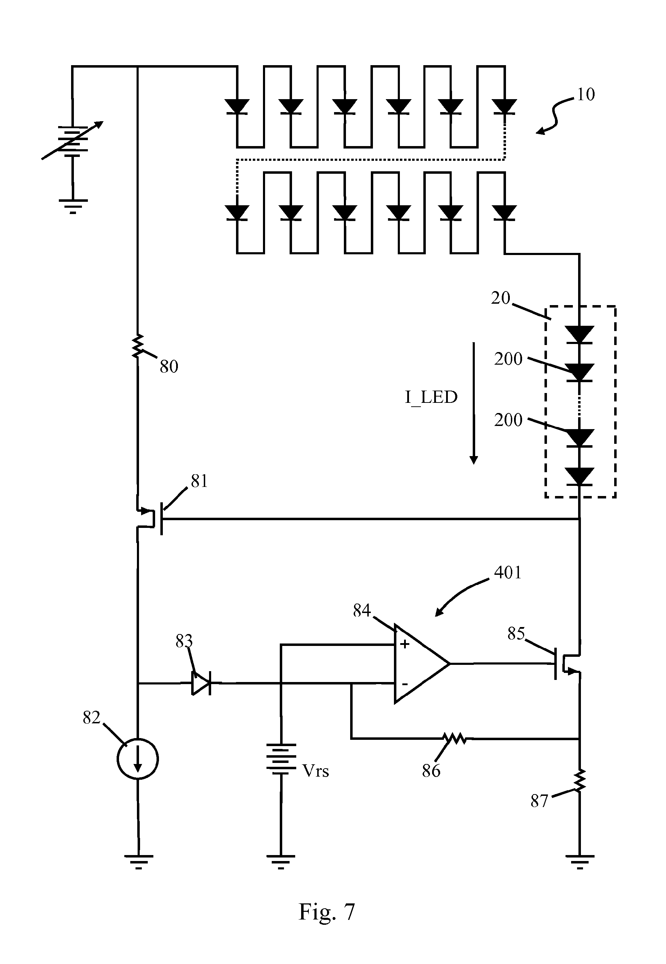

With reference to Fig. 7, Fig. 7 is an embodiment of the LED direct driver in accordance with a device of the present disclosure. Like many adaptive LED direct driver schemes, this one requires modification of the LED current in order to provide constant optical output power as more or less minor LED strings 200 are dynamically added to the major LED string 10.

In this embodiment, the LED direct driver comprises a current sensing resistor 80, a first transistor 81, an internal current source 82, a exceeding diode 83, an error amplifier 84, an NMOS transistor 85, an offset resistor 86 and a REST resistor 87.

The current sensing resistor 80 is connected to the first end of the major LED string 10, and the pre-regulator 30. The first transistor 81 has three ends, a first end connects to the current sensing resistor 80, and a second end connects to the second end of the minor LED string set 20. The connection of the current sensing resistor 80 and the first transistor 81 is able to senses the complete voltage across the major LED string 10 with added on minor LED string 200 (the current through the current sensing resistor 80 is proportional to the voltage across the major LED string 10 with added on minor LED string 200). The internal current source 82 is connected to a third end of the first transistor 81. The value of the current source 82 is preset to equal the current of the current sensing resistor 80 with minimum value of the regulated voltage output (i.e., the minimum expected voltage of the LED direct driver).

The exceeding diode 83 has an anode end and a cathode end, and the anode end is connected to the third end of the first transistor 81. The error amplifier 84 has a positive input, a negative input and an output. The positive input of the error amplifier 81 is connected to a reference voltage source Vrs. The negative input of the error amplifier 81 is connected to the cathode end of the exceeding diode 83. The NMOS transistor 85 has three end, a first end connects to the second end of the minor LED string set 20, a second end connects to the output of the error amplifier 84, and a third end connects to the REST resistor 87. The offset resistor 86 is connected between the negative input of the error amplifier 81 and the REST resistor 87. The error amplifier 84 and the NMOS transistor 85 formed a basic current source as described in previous paragraphs as the current source 401.

When the current through the current sensing resistor 80 higher than the current preset in the current source 82, the excess current flows toward the exceeding diode 83. When current flows through the exceeding diode 83, it creates a voltage drop across the offset resistor 86. The subsequent voltage drop across the offset resistor 86 creates an offset voltage between the reference voltage source Vrs and the REST resistor 87, which causes the LED current to decrease. The decreasing resultant LED (I_LED) current has a relationship of:

$$I\_LED = (Vrs - R\_86*((V\_LED/R\_80)-I\_82))/R\_87 \;;$$

wherein Vrs is the voltage value of the reference voltage source, R_86 is the resistance of the offset resistor 86, R_80 is the resistance of the current sensing resistor 80, I_82 is the current preset of the current source 82, and the R_87 is the resistance of the REST resistor 87.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

**Claims**

1. A device for LED direct driver comprising:

   a major LED string having multiple series-connected LED diodes which has a first end and a second end;
   a minor LED string set having a first end and a second end, and being formed with multiple series-connected minor LED strings, the first end of the minor LED string set being connected to the second of the major LED string;
   a pre-regulator comprising:

      a diode rectifier being connected to a power source, and being configured for converting an AC input voltage of the power source to a pulsating DC voltage; and
      a power factor (PF) correction module being connected between the diode rectifier and the first end of the major LED string, which regulates the pulsating DC voltage to a regulated voltage, wherein the regulated voltage output is used for driving the major LED string, the minor LED string set or both; and

   a direct driver having a current source, and being connected to each one of the minor LED strings, which selectively shorts out selected minor LED strings.

2. The device as claimed in claim 1, further comprising a communication path between the pre-regulator and the direct driver.

3. The device as claimed in claim 1 or 2, wherein the direct driver further comprises:

   a feedback current path connected to a controller of the pre-regulator; and
   a feedback current module generates a control voltage to the controller of the pre-regulator through the feedback current path for adjusting the regulated voltage output.

4. The device according to any one of the preceding claims, wherein

   the feedback current module comprises

      an integrator connected between the LED minor string set and the current source; and
      a current messenger connected between the integrator, which is configured to selectively source current with a directional diode; and

   the feedback current path comprises

a first resistor;

a second resistor connected to the first resistor of the feedback current path in series, and a junction of the first resistor and the second resistor is connected to the internal comparator of the controller, and the internal comparator has an internal reference voltage; and

a third resistor, and a first end of the third resistor being connected to a junction of the first resistor and the second resistor, and a second end of the third resistor being connected to the current passenger.

5. The device as claimed in claim 4, wherein

the integrator is formed by an operational amplifier with a reference voltage; and

the current messenger is a inverter that sources current when the voltage of the current source higher than the reference voltage.

6. The device as claimed in claim 4 or 5, wherein

the integrator is formed a trans-conductance amplifier driving a capacitor; and

the current messenger is a buffer.

7. The device according to any one of the preceding claims, wherein the pre-regulator is coupled to multiple direct drivers.

8. The device as claimed in claim 7, wherein each of the multiple direct drivers has the feedback current module that sink current from the feedback current path, and the lowest sink current is considered for generating a control voltage.

9. The device as claimed in claim 7 or 8, wherein the feedback current path comprises

a first resistor;

a second resistor connected to the first resistor of the feedback current path in series, and a junction of the first resistor and the second resistor is connected to the internal comparator of the controller, and the internal comparator has an internal reference voltage; and

a third resistor, and a first end of the third resistor being connected to a junction of the first resistor and the second resistor.

10. The device as claimed in any one of claims 7 to 9, further comprising a securing diode connected between the third resistor and the current messenger, which only allows current to flow toward the pre-regulator at the junction of the first resistor and the second resistor.

11. The device according to any one of the preceding claims, wherein the direct driver comprises

a current sensing resistor sensing a current corresponded to the voltage across the major LED string with added on minor LED string;

an internal current source has a current preset that is preset to equal the current of the current sensing resistor with minimum value of the regulated voltage output;

a exceeding diode;

a first transistor allowing the exceed current flow through the exceeding diode when the sensed current from the current sensing resistor is higher than the current preset of the internal current source;

an error amplifier having a reference voltage source;

an NMOS transistor being connected to the error amplifier that forms the current source; a REST resistor; and

an offset resistor being connected to exceeding diode, which create an offset voltage between the voltages of the reference voltage source and the REST resistor, wherein the offset voltage causes the LED current to decrease.

12. The device as claimed in claim 11, wherein

the current sensing resistor is connected to the first end of the major LED string, and the pre-regulator;

the first transistor has three ends, a first end connects to the current sensing resistor and a second end connects to the second end of the minor LED string set;

the internal current source is connected to a third end of the first transistor;

the exceeding diode has an anode end and a cathode end, and the anode end is connected to the third end of the first transistor; and

the error amplifier has a positive input, a negative input and an output;

the positive input of the error amplifier is connected to a reference voltage source, the negative input of the error amplifier is connected to the cathode end of the exceeding diode;

the NMOS transistor has three end, a first end connects to the second end of the minor LED string set, a second end connects to the output of the error amplifier, and a third end connects to the REST resistor; and

the offset resistor is connected between the negative input of the error amplifier and the REST resistor.

30

301 302

10

20

40

LED DIRECT

DRIVER

200

200

200

Fig. 1

Fig. 2

30

controller

LED
DIRECT
DRIVER

40

LED
DIRECT
DRIVER

40

LED
DIRECT
DRIVER

40

Fig. 3

Fig. 4

Fig. 5

Fig. 6

Fig. 7

Europäisches
Patentamt

European
Patent Office

Office européen
des brevets

# EUROPEAN SEARCH REPORT

Application Number

EP 15 18 6406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 665 341 A1 (GRAY RICHARD LANDRY [US]; MAO YUHAI [US]) 20 November 2013 (2013-11-20) | 1 | INV. H05B33/08 |
| Y | * paragraph [0027] - paragraph [0030]; figure 2 * <br> * paragraph [0057] - paragraph [0059]; figure 10 * | 2-12 | |
| Y | WO 2011/021932 A1 (ELDOLAB HOLDING BV [NL]; SAES MARC [NL]; WELTEN PETRUS JOHANNES MARIA) 24 February 2011 (2011-02-24) * page 12, line 17 - line 36; figure 2 * | 2,3 | |
| Y | US 2010/013395 A1 (ARCHIBALD NICHOLAS IAN [US] ET AL) 21 January 2010 (2010-01-21) * paragraph [0027]; figure 4 * * paragraph [0018] * | 4-12 | |

TECHNICAL FIELDS
SEARCHED (IPC)

H05B

The present search report has been drawn up for all claims

| Place of search | Date of completion of the search | Examiner |
|---|---|---|
| Munich | 29 February 2016 | Plamann, Tobias |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 18 6406

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2016

| Patent document cited in search report | | Publication date | Patent family member(s) | | Publication date |
|---|---|---|---|---|---|
| EP 2665341 | A1 | 20-11-2013 | CN | 103428959 A | 04-12-2013 |
| | | | EP | 2665341 A1 | 20-11-2013 |
| | | | JP | 2013239711 A | 28-11-2013 |
| | | | TW | 201349931 A | 01-12-2013 |
| | | | US | 2013307424 A1 | 21-11-2013 |
| WO 2011021932 | A1 | 24-02-2011 | EP | 2468071 A1 | 27-06-2012 |
| | | | EP | 2836054 A1 | 11-02-2015 |
| | | | US | 2012223649 A1 | 06-09-2012 |
| | | | WO | 2011021932 A1 | 24-02-2011 |
| US 2010013395 | A1 | 21-01-2010 | CN | 101631411 A | 20-01-2010 |
| | | | CN | 101668370 A | 10-03-2010 |
| | | | KR | 20100008353 A | 25-01-2010 |
| | | | KR | 20100008354 A | 25-01-2010 |
| | | | TW | 201004482 A | 16-01-2010 |
| | | | TW | 201008382 A | 16-02-2010 |
| | | | TW | 201438520 A | 01-10-2014 |
| | | | US | 2010013395 A1 | 21-01-2010 |
| | | | US | 2010013412 A1 | 21-01-2010 |

EPO FORM P0459

For more details about this annex : see Official Journal of the European Patent Office, No. 12/82